# EUROPEAN PATENT SPECIFICATION

(11) **EP 1 852 014 B1**
(45) Date of publication and mention of the grant of the patent: **19.03.2014**
(21) Application number: 06380187.2
(22) Date of filing: 29.06.2006
(51) Int. Cl.: B65G 57/00, A01J 25/16

(54) **Process of depalletizing-palletizing cheeses in baskets, as well as machine for depalletizing-palletizing cheeses in baskets**
Verfahren zum Palettieren-Entpalettieren von Käse in einen Korb, sowie ein Gerät zum Palettieren-Entpalettieren von Käse in einen Korb
Procédé de dépalettisation-palettisation de fromages dans des récipients, ainsi qu'une machine pour dépalettiser-palettiser des fromages dans des récipients

(30) Priority: 04.05.2006 ES 200601128
(43) Date of publication of application: 07.11.2007
(73) Proprietor: Mael Tecnomat, S.L., 49027 Zamora (ES)
(72) Inventor: Gomez Viñuela, Carlos Alberto, 49027 Zamora (ES); Hernandez Rodriguez, Juan Angel, 49027 Zamora (ES)
(74) Representative: Carpintero Lopez, Francisco

(56) References cited:
- EP-A- 0 651 941
- EP-A- 0 736 247
- EP-A- 1 044 601
- DE-A1- 2 019 636
- FR-A- 2 056 901
- FR-A- 2 772 232

## Description

### OBJECT OF THE INVENTION

The object of the present invention relates to a process of depalletizing-palletizing cheeses in baskets as well as to the machine which achieves said depalletizing and palletizing of cheeses.

This totally automated process provides great advantages over the current process of palletizing and/or depalletizing cheeses within cheese manufacturing or handling companies.

The cheese depalletizing and palletizing process is mainly based on the entry of said cheeses grouped in baskets, which are introduced in a turning device which rotates the basket or baskets so that it/they are removed empty if being depalletized or it fills it/them if the cheese is being palletized.

This depalletizing-palletizing operation is necessary in cheese factories where, in the cheese curing process, it is necessary to give them priming, a coating or any treatment, which as it is a considerable product stock would involve a large workforce and quite an important slowing down of the process.

### BACKGROUND OF THE INVENTION

Document EP 1 044 601 A consists of a turner for racks of cheeses during maturation which operates automatically. Nevertheless, in general, the process of depalletizing and palletizing cheeses in cheese factories where the cheese is cured and matured is performed using quite a large workforce, depending on the size of the cheese factory and with the process taking a very considerable time.

The inventor of the present invention is the holder of Spanish patent ES-2234376 relative to a cheese palletizing machine wherein a fundamental characteristic is providing a frame with holds a plurality of fingers in charge of entering the areas between the cheeses to be palletized and trapping the cheeses between them to deposit them on the cheese palletizing baskets.

Despite this machine being highly efficient and safe in its operations, it suffers from a problem of mechanical complexity with numerous arms and levers, whilst being a rather inflexible machine to adapt to other configurations of cheese positioning baskets.

Despite this machine being highly efficient, it also runs the risk that an arm may "pinch" or "mark" the cheeses it collects if the machine's arms are incorrectly positioned or off-balance.

The same inventor is also holder of Spanish patent ES-2234375 relating to a cheese depalletizing machine.

In order to achieve a simplification of the machine of the invention, the present invention which totally resolves the difficulties noticed in the state of the art has been developed.

### DESCRIPTION OF THE INVENTION

In the cheese manufacturing process and once the moulds which define the external form of the cheese and the size thereof have been defined, these moulds are either subjected or not to external pressure, which expulses the whey and enables the cheese to adopt forms adapted to the mould where it is produced.

Once this phase has been performed, said moulds are demoulded and the cheese thus formed is subjected to the cheese salting and maturing phases in appropriate maturing places, it being easier to handle these cheeses due to the fact they are included in baskets where an appropriate number of cheeses are grouped, for example in baskets of twelve cheeses, which is the most appropriate way of grouping said cheeses without rejecting any other possible form.

During the cheese maturing or curing process, they are subjected to different processes which include, for example, salting which is performed by immersion in brine, treatments for priming the cheese surface, painting the outer surface of the cheese, etc, processes which are performed during the curing phase and which involve the depalletizing or removal of the cheeses from the maturing baskets and once the treatment is performed they are again palletized to continue the maturing process.

The depalletizing process consists of the following stages:
- Collecting the baskets with cheeses in the maturing process from the storage place.
- Introducing the baskets in the depalletizer.
- Introducing at least one basket in the turning device which rotates the basket with its cheeses 180°.
- Exit of the basket(s) and cheeses directly resting on the conveyer from the turning device.
- Removing the basket(s) and permanence of the cheeses on the conveyer.
- Removing the cheeses to their treatment phase.

The cheese palletizing process consists of the following stages:
- Introducing the cheeses on the palletizer, either coming from the treatment thereof or not.
- Positioning the cheeses on a conveyer at the suitable distance to the basket or baskets that have to hold them.
- Positioning at least one basket on the cheeses, the cheeses being located in the compartments of the basket(s) which will hold them.
- Introducing the basket(s) with the cheeses in the turning device.
- Turning the basket(s) and its/their cheeses inside at an angle of 180°.
- Removing the basket or baskets and cheeses from therein.
- Stacking the baskets with their cheeses in the stacker.
- Removing the stacked baskets for their storage or distribution.

The depalletizing-palletizing machine of the invention which performs the above process consists of the following elements.

Firstly, the baskets carrying the cheeses in the curing process must be moved to the proximities of the machine in question. After this, a robot will collect the baskets one by one to leave them on a motorized table which incorporates a conveyer belt, in charge of introducing at least one basket in the turning device when it receives the instruction from it that it is prepared to receive said basket or baskets.

This turning device is constituted by a triple ring, formed by two lateral hoops in charge of supporting the turning device which rests on rollers, for example of nylon, to facilitate movement, whilst in the centre of this assembly there is a ring moved by a chain or appropriate means of transmission, that, gripping this whole ring, is moved by an electric motor in 180° rotations.

This whole assembly is stiffened by circumscribing a structural frame on the interior of these three rings thus formed, which includes a lower conveyer belt and an upper conveyer belt, which can move vertically to adapt to any type of basket on the market. Both conveyer belts between which the basket or baskets are introduced are capable of retaining the basket or baskets with its/their cheeses and turning said baskets by a 180° rotation, then removing said turned baskets with their cheeses inside the compartments containing the cheeses.

This basket or these baskets, which are removed after being turned, are introduced on a support table whose base is a conveyer belt, to then remove the basket(s), for which a robot equipped with a holding clamp and vertically movable descends to the proximity of the baskets, then clamping said baskets with its grippers, raising them and then removing them to the palletizing section or to their removal.

Once the baskets have been removed, the cheeses are positioned on the conveyer belt and, through its movement, the cheeses are removed to a conveyer belt which will carry the cheeses to the correct production phase where the cheeses will be impregnated, painted or subjected to any other process that forms part of cheese production.

The part of the machine corresponding to palletizing may or may not be in harmony with the depalletizing process, since once said cheeses have been treated they again have to be palletized in order for them to continue with the curing process, thus, for example, the cheeses will reach the palletizing machine by a conveyer belt whereby, and using a pusher, it will position the cheeses in the correct order and number on a table which incorporates a conveyer belt. It should be stated that the number and arrangement of the cheeses will be in harmony with the form and separation of the cheeses within the container baskets.

Once the cheeses have been positioned on this transport table, the upper robot which is preferably that which depalletizes, deposits the basket or baskets right on top of the cheeses, baskets which may preferably come from the depalletizing area, closing the process, or may come from an external store of empty baskets.

Once at least one basket has been deposited on the cheeses, it is introduced with the cheeses in a turning device which has structural characteristics very similar to those described in the depalletizer. This turning device then rotates the baskets 180° to then remove them to the evacuation table where another robot removes said baskets by stacking them to subsequently place them in the predetermined cheese curing place.

Despite said invention being treated as a cheese depalletizing and palletizing process and being a cheese depalletizing-palletizing machine, the invention also covers the separation of both machines from one another and the processes of depalletizing and palletizing cheeses in baskets, i.e. it would only include machines that produced the depalletizing and its process and machines which cover the palletizing and its process.

### DESCRIPTION OF THE DRAWINGS

To complement the description being made and with the object of helping towards a better understanding of the characteristics of the invention, in accordance with a preferred example of practical embodiment thereof, a set of figures is attached as an integral part of the description, wherein the following has been represented with an illustrative non-limitative character:
- Figure 1: represents a schematic diagram of the cheese depalletizing-palletizing process as defined in the present invention.
- Figure 2: represents a top perspective view of the depalletizing-palletizing machine of the invention.
- Figure 3: shows an elevational view of the same depalletizing-palletizing machine of the invention.
- Figure 4: represents a front view of the machine of the invention.
- Figure 5: represents a perspective view of the supply area of the baskets which reach the depalletizing area and the removal area of the baskets from the palletizing area.
- Figure 6: represents a detailed view of the turning device of the invention.
- Figure 7: represents a more general front view of the turning device of the invention.
- Figure 8: represents a detailed view of the actuating elements of the conveyer belts and the actuation of the turning device.
- Figures 9 and 10: represent different perspective and plan views of the palletizing area of the machine of the invention, including a schematic representation of the turning device in the perspective view.
- Figure 11: represents a perspective view of the palletizing area once a basket has been deposited on the cheeses positioned there.
- Figures 12 and 13: represent in detail the carrier of the robot in charge of removing and positioning the cheese palletizing basket.

### PREFERRED EMBODIMENT OF THE INVENTION

The preferred embodiment relates to the introduction of a single basket in the turning device but several of those baskets could equally be introduced.

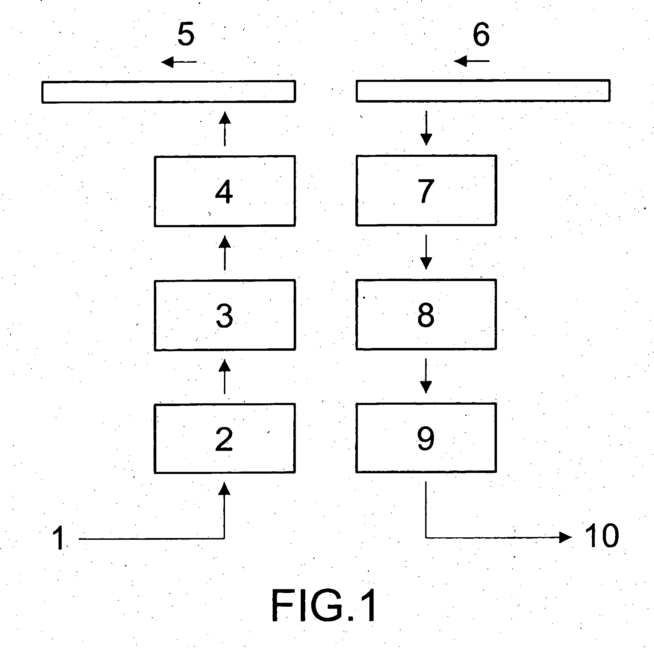

Figure 1 schematically represents the cheese depalletizing-palletizing process proposed by the invention. This process is divided in two parts which may be complementary or independent, depending on whether the aim is to depalletize or just palletize cheeses or whether the aim is to perform the two operations in a graduated manner in the cheese production process.

The cheese depalletizing process consists of the following stages:
- Collecting the baskets with cheeses in the maturing process from the storage place (1).
- Introducing the baskets individually in the depalletizer (2).
- Introducing the baskets in the turning device (3) which rotates the basket with its cheeses 180°.
- Exit of the basket and cheeses directly resting on conveyer (4) from the turning device.
- Removing the basket and permanence of the cheeses on conveyer (4).
- Removing the cheeses (5) to their treatment phase.

The cheese palletizing process consists of the following stages:
- Introducing the cheeses (6) on the palletizer, either coming from the treatment thereof or not.
- Positioning the cheeses on a conveyer (7) at the suitable distance to the basket that has to hold them.
- Positioning a basket on the cheeses, the cheeses being located in the compartments of the basket which will hold them.
- Introducing the basket with the cheeses in the turning device (8).
- Turning the basket and its cheeses inside at an angle of 180°.
- Removing the basket and cheeses from therein.
- Stacking the baskets with their cheeses in the stacker (9).
- Removing the stacked baskets (10) for their storage or distribution.

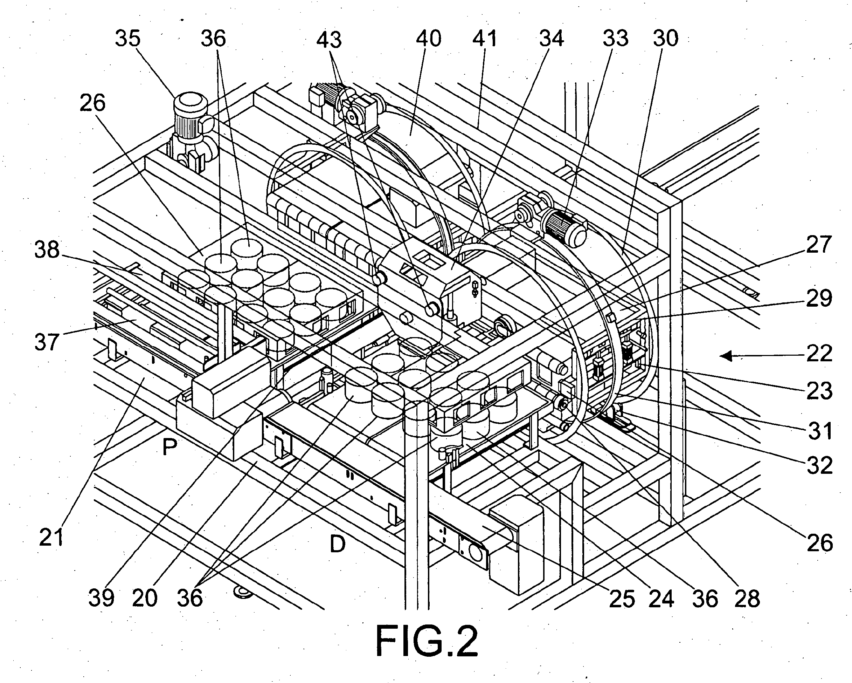

Going into the machine's description, we can observe in figure 2 how the depalletizing area is represented with the numerical reference (20) and the palletizing area is represented with number (21).

In the depalletizing area (20), there is a first basket entry with the cheeses included therein represented with (22), although no element has been represented in said area in order for a better understanding of the attached drawing. There is a turning device (23) in charge of turning the basket (26) introduced between conveyers (27) and (28) supported on a framework formed by two peripheral rings (30) and a central ring (31) actuated by a geared motor (33) which connects via a chain or suitable means of transmission with the ring (31).

The peripheral rings (30), which are the supports of the turning device, rest on their lower part on different rollers (32) and also do so on their upper part on an equal amount of rollers, this turning device being perfectly guided during the operation thereof.

Once the basket with the cheeses inside has been turned, conveyers (27) and (28) move the assembly towards conveyer (24) in which projection acts a robot (34) actuated by a geared motor (35) which is in charge of collecting the basket and sending it empty to the palletizing area (21) or to the chosen stacking area.

The cheeses (36) which are on conveyer (24), are moved forward to conveyer (25), which removes the cheeses to give them the precise treatment and which is outside the context of the invention.

The cheese palletizing area (21) starts with a conveyer (37) whereby the cheeses arrive aligned, there existing an arm (38) which positions the cheeses (36) in a line according to the arrangement of compartments the basket (26) has. This basket (26) will be the one that the robot (34) has deposited from the removal from the depalletizing area (20).

Said robot (34) will deposit the basket (26) from its upper part, fitting the cheeses (36) in the basket compartments. In this position the cheeses are not retained by the basket and, therefore, if it is removed the way the basket is now, the cheeses will fall therefrom. For the basket to retain the cheeses, it must be rotated 180°, for which reason this basket (26) with the cheeses (36) is introduced from conveyer (39) to turning device (40) wherein, despite having given a different reference, the same references indicated in the turning device of the depalletizing area can practically be used.

This turning device will rotate the basket and cheeses carried in the basket 180°, said basket and cheeses kept therein exiting towards the area (41) where they will be stacked to later be sent to the cheese storage area, for their curing or for their destination for the distribution thereof.

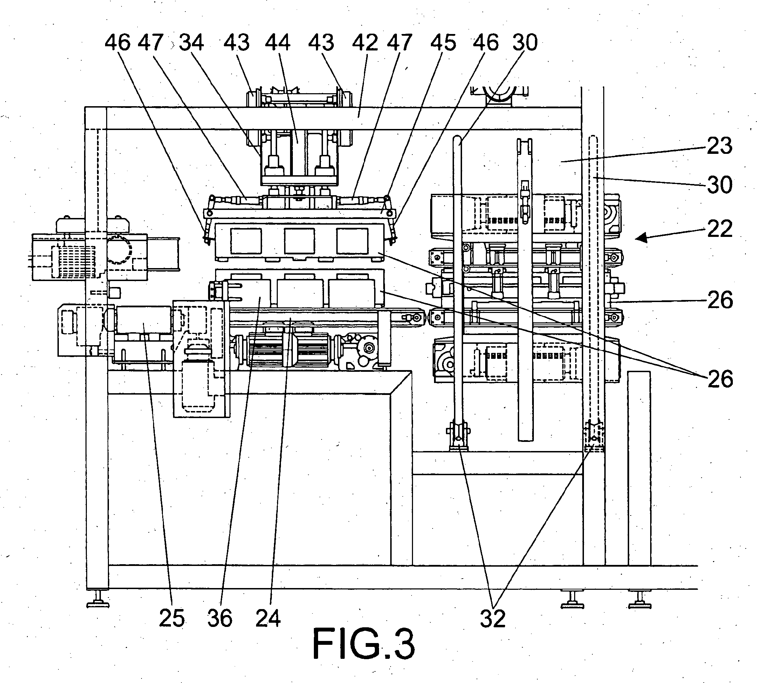

Figure 3 shows an elevational view of the same depalletizing-palletizing machine of the invention previously described in figure 2. In this figure, it can be observed how, although not represented in this figure, the baskets (26) loaded with cheeses arrive from area (22), the same ones being introduced in turning device (23). In this figure all the elements indicated in figure 2 are again represented making the description thereof still valid.

Conveyer (24) is positioned after the turning device and the robot (34) is found above it and supported by the structure (42) of the machine, a robot which moves on wheels (43) on rails and its structure can move vertically by incorporating a pneumatic cylinder (44) which supports a second structure (45) which at its ends has grippers (46) actuated by respective pneumatic cylinders (47) whose actuation causes the fastening or unfastening of the basket (26) and with it the raising or lowering thereof on conveyer (24).

Once the cheeses (36) have been palletized, driven by conveyer (24) they are deposited on the conveyer belt (25).

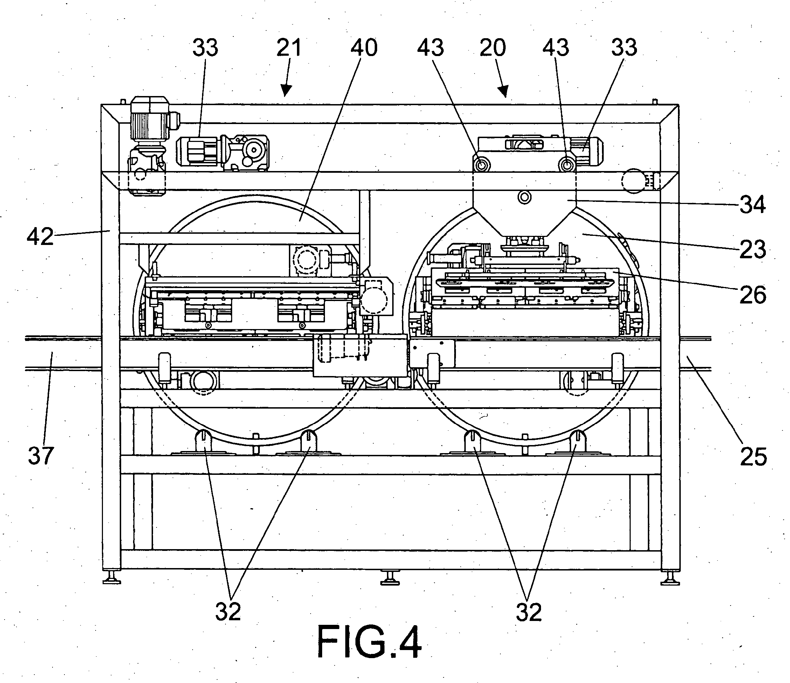

Figure 4 represents a front view of the machine of the invention showing the turning devices (23) of the depalletizing area (20) and the one (40) of the palletizing area (21), actuated by the motors (33) and supported in a rotating manner via rotatable nylon rollers (32), supported by the structure (42) of the machine. References (25) and (37) represent the conveyer belts of the depalletizing area (20) and palletizing area (21) respectively. Reference sign (34) represents the robot which collects the baskets (26) which, in this representation, is in the depalletizing area (20) which will later transfer said basket to the palletizing area (21).

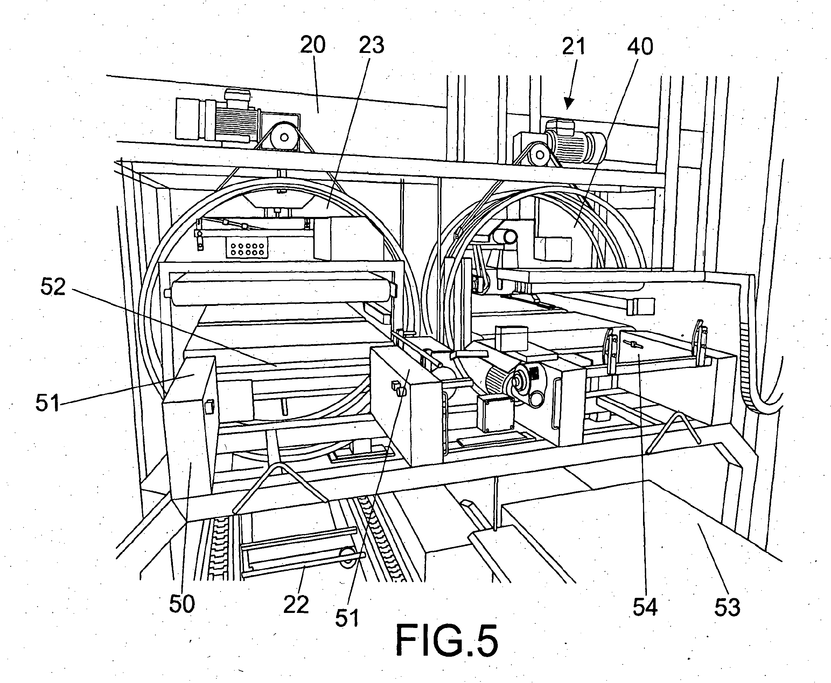

Figure 5 represents a perspective view of the supply area of the baskets which reach the depalletizing area (20) and the basket removal area of the palletizing area. This figure serves to show the arrival area (22) of the stacks of baskets with cheeses, which are unitarily introduced on the table (50) after their introduction in the turning device (23) of the depalletizing area (20). This table (50) has two side chains (51) actuated by a common axis (52) these chains introducing the basket with its cheeses when the operating program so orders and the corresponding turning device when it is unloaded and it is also in the correct position for its introduction.

The palletizing part shows the area (53), where the baskets and their cheeses which come from the corresponding table (54) will consecutively be stacked, exiting the turning device (40) of the palletizing area (21).

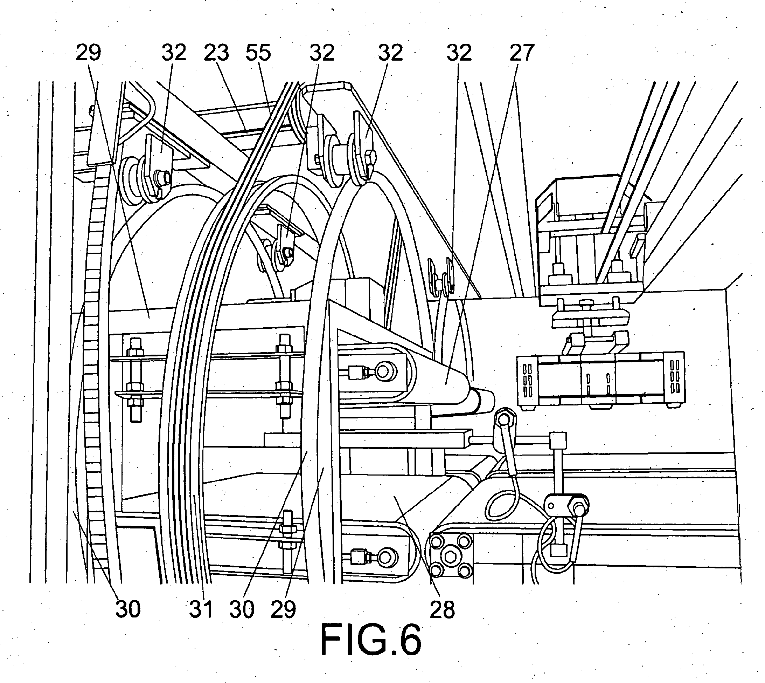

Figure 6 represents a detailed view of the turning device (23) in the depalletizing area (20), showing the peripheral rings (30) as well as the upper support rollers (32). Among the peripheral rings (30) is positioned the central ring (31) which is that of actuation and like the chain (55) is in charge of its actuation displaced by the geared motor (33) omitted from said figure. Inside the turning device, a frame (29) is configured circumscribed, which holds conveyers (27) and (28), between which the baskets with the cheeses inside are introduced.

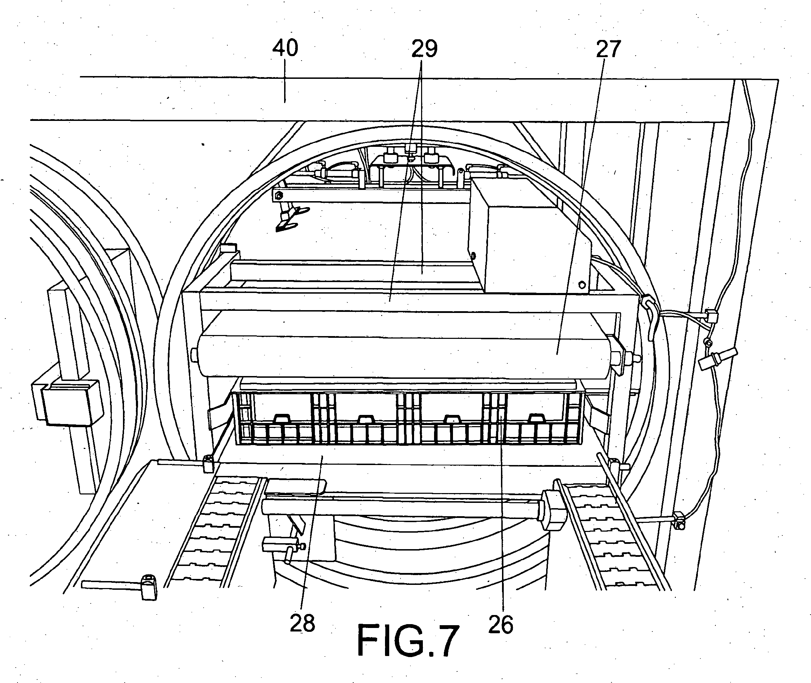

Figure 7 represents a more general front view of the turning device of the palletizing area (21), how the frame (29) is circumscribed and how conveyers (27) and (28) grip a basket (26) between one another. The upper conveyer (27) can move vertically in order to adapt to any width of basket existing on the market.

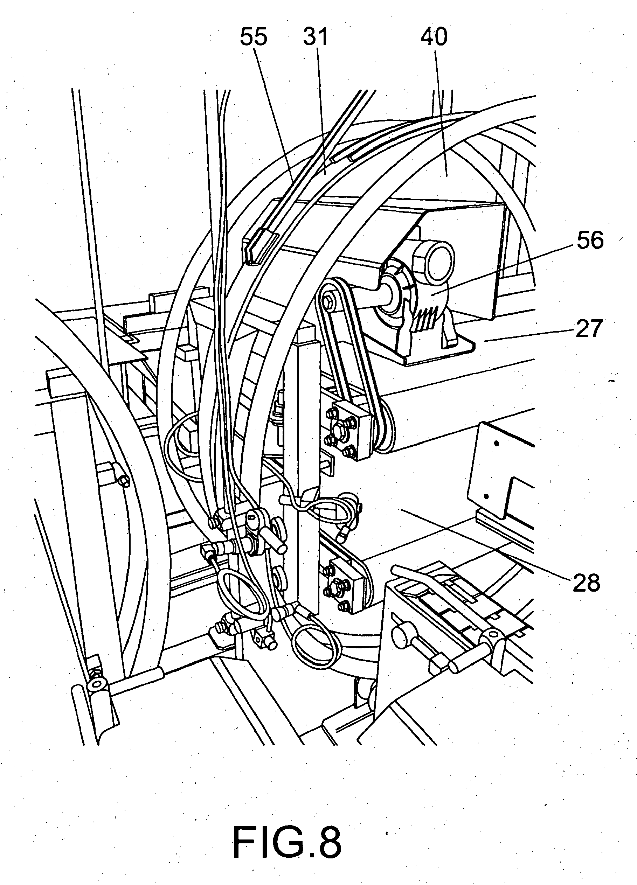

Figure 8 represents a detailed view of the actuating elements of conveyer belts (27) and (28) which actuate turning device (40), achieved via a geared motor (56) which transmits its movements via a chain to the axis of the upper conveyer (27). This same figure shows how the actuating chain or appropriate means of actuation (55) is joined to the central ring (31) of the turning device (40).

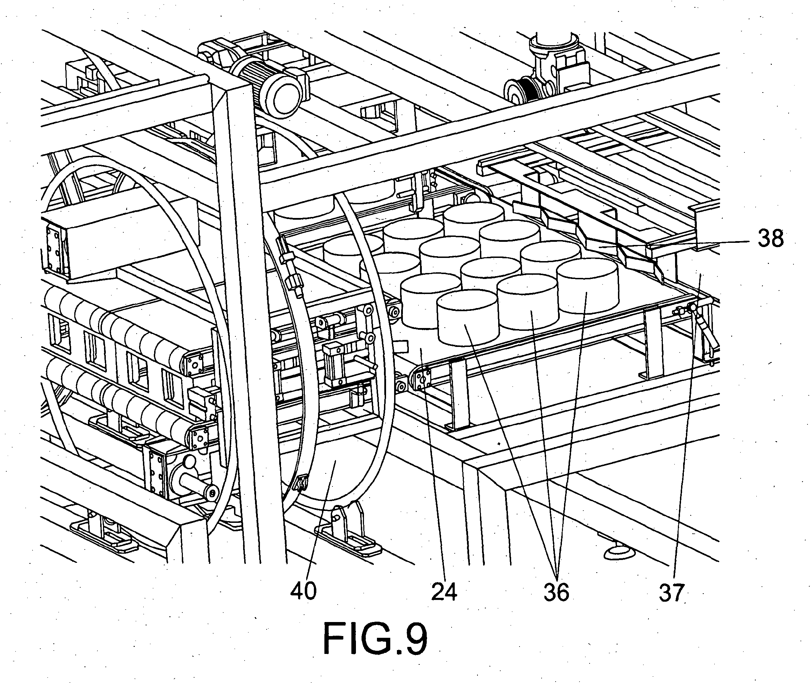

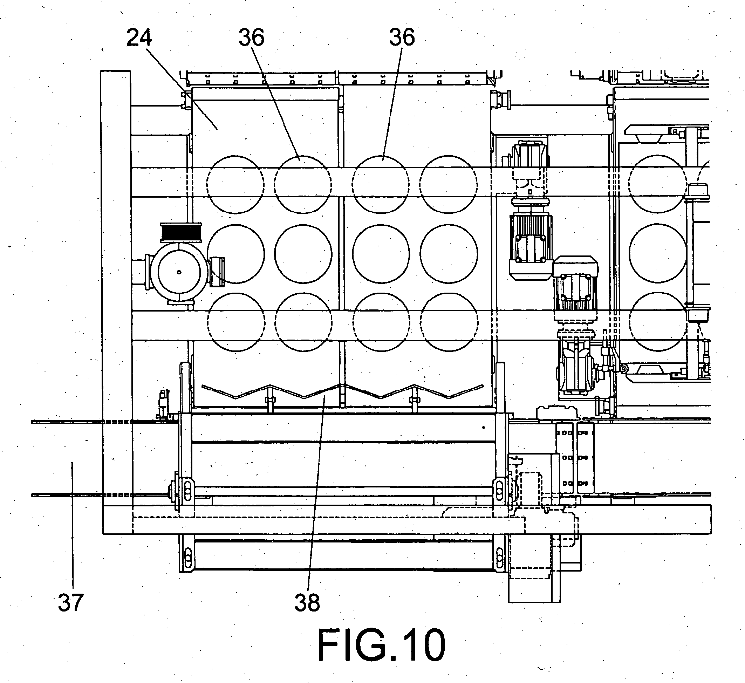

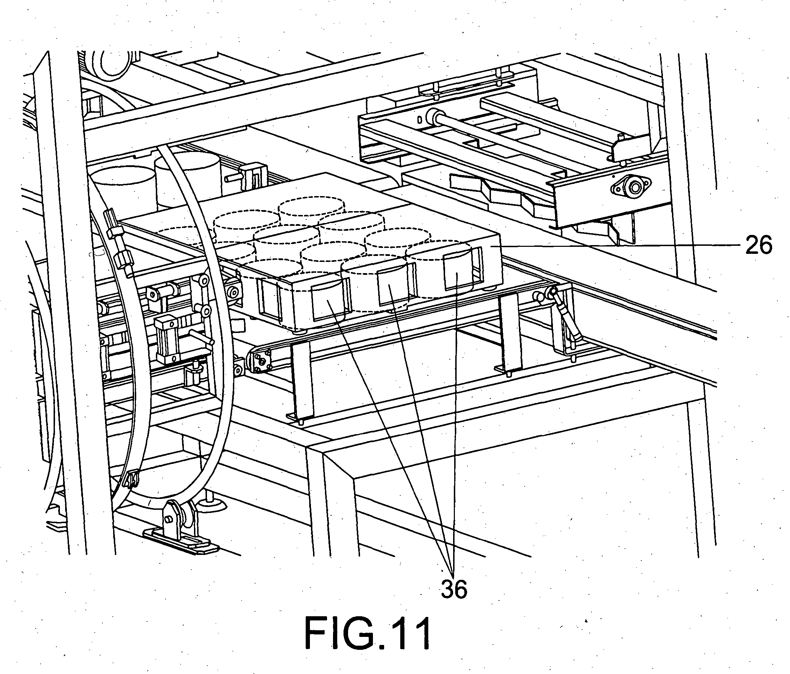

Figures 9 and 10 represent different perspective and plan views of the palletization area of the machine of the invention, including, in the perspective view, a schematic representation of the turning device of the palletizing area (21). These figures show the arm (38) as it collects the cheeses from the conveyer belt (37) and stores them on conveyer (24), for which reason, and in order to appropriately separate the cheeses (36), said arm has concave portions for this. If the cheese is in a bar, said arm may be straight instead of with cavities which fit in the cheeses and that already have the separations between said cheeses defined. This arm will make the configuration shown in figures 9 and 10 row by row to later deposit a basket before entering in the turning device of the palletizing area as is shown in figure 11 which shows a perspective view of the palletizing area once a basket (26) has been deposited on the cheeses (36) positioned there.

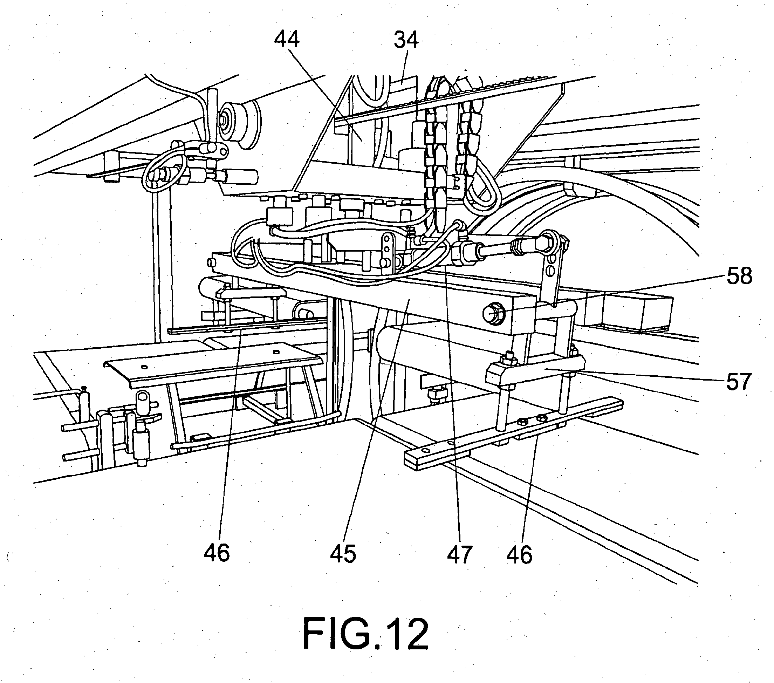

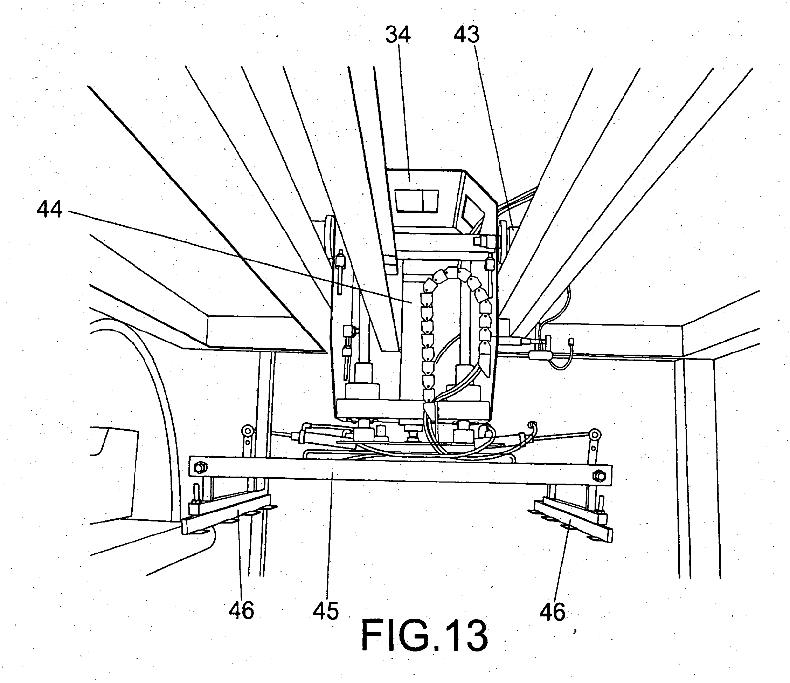

Figures 12 and 13 represent in detail the carrier of the robot (34) in charge of removing and positioning the cheese palletization basket (26). This robot (34) has wheels (43) for sliding over guides connected to the machine frame, said robot consisting of a structure (45) which can raise and lower due to the action of a pneumatic piston (44), whilst at both sides of this structure (45), grippers (46) of great width are positioned to ensure the grip of the basket, actuated by different pneumatic pistons (47) in charge of making the rockers (57) articulated on the rotation axis (58) tilt.

## Claims

1. Process of depalletizing cheeses located in storage and/or transport baskets which comprises:
- Collecting the baskets with cheeses in the maturing process from the storage place (1).
- Introducing the baskets in the depalletizer (2).
- Introducing at least one basket in the turning device (3) which rotates the basket with its cheeses 180°.
- Exit of at least one basket and cheeses directly resting on the conveyer (4) from the turning device (3).
- Removing the basket(s) and permanence of the cheeses on the conveyer (4).
- Removing the cheeses (5) to their treatment phase.

2. Process of palletizing cheeses to house them in storage and/or transport baskets which comprised:
- Introducing the cheeses (6) on the palletizer, either coming from a treatment thereof or not.
- Positioning the cheeses on a conveyer (7) at the suitable distance to the baskets that have to hold them.
- Positioning at least one basket on the cheeses, the cheeses being located in the compartments of the basket(s) which will hold them.
- Introducing at least one basket with the cheeses in the turning device (8).
- Turning at least one basket and its cheeses inside at an angle of 180°.
- Removing the baskets and cheeses from therein.
- Stacking the baskets (10) with their cheeses in the stacker (9).
- Removing the stacked baskets (10) for their storage or distribution.

3. Process for depalletizing-palletizing cheeses located in storage and/or transport baskets **characterised in that** comprise:
- a process of depalletizing cheeses according to claim 1.
- treatment of the cheeses.
- a process of palletizing cheeses according to claim 2.

4. Machine for depalletizing-palletizing cheeses located in storage and/or transport baskets comprising:
- A table (50) introduce cheese storage baskets (26).
- A turning device (23) of at least one basket (26) formed by two peripheral rings (30) and a central ring (31) actuated via a geared motor (33), a frame (29) being circumscribed inside these three rings whereon conveyers (27) and (28), between which the basket with cheeses is positioned during their turning, are joined.
- A conveyer (24) where the baskets are separated from the cheeses (36).
- A conveyer belt (27) for the cheeses (36) to send them to the treatment phase.
- A conveyer belt (28) for entry of treated cheeses (36) to the palletizing area (21).
- A conveyer (39) where one or several baskets are positioned on the cheeses aligned there.
- A robot (34) which collects the empty baskets (26) from the depalletizer (20) and transfers them to the palletizer (21) to fill them with cheeses (36), said robot has wheels (43) which can slide on rails, as well as a structure (45) whereon grippers (46) of the baskets tilt.
- A turning device (40) of baskets; and
- A robot (34) to remove the full baskets from the palletizer to stack them.

5. Machine for depalletizing-palletizing cheeses located in storage and/or transport baskets according to claim 4, **characterized in that** the grippers (46) are attached to rockers (57) articulated in axes (58) articulated to the structure (45) and actuated by pneumatic pistons (47).

6. Machine for depalletizing-palletizing cheeses located in storage and/or transport baskets according to claim 4 and 5 , **characterized in that** the robot (34) has a pneumatic cylinder (44) which raises and/or lowers the structure (45) holding the grippers (46).

7. Machine for depalletizing-palletizing cheeses located in storage and/or transport baskets according to claim 4, **characterized in that** the peripheral rings (30) of the turning device rest on and guide rotatable rollers (32),

8. Machine for depalletizing-palletizing cheeses located in storage and/or transport baskets according to claim 4, **characterized in that** the palletizer has an arm (38) which moves the cheeses from the supply conveyer belt (37) to conveyer (24) in successive alignments in accordance with the configuration of the basket containing the cheeses (36).

9. Machine for depalletizing-palletizing cheeses located in storage and/or transport baskets according to claim 8, **characterized in that** the arm (38) has concave portions where the cheeses fit and thus maintain the distance between the cheeses in accordance with the form and dimensions of the basket (26).

10. Machine for depalletizing-palletizing cheeses, according to claim 8, **characterized in that** the arm (38) is straight.

11. Machine for depalletizing-palletizing cheeses located in storage and/or transport baskets according to claim 4 , **characterized in that** the conveyer (27) can move vertically adapting their separation to the size of the baskets (26) holding the cheeses (36).

## Patentansprüche

1. Verfahren zum Depalettieren von Käsen, welche in Lager- und/oder Transportkörben angeordnet sind, das Verfahren umfassend:
- Einsammeln der Körbe mit Käsen im Reifeprozess aus dem Lagerplatz (1);
- Einführen der Körbe in den Depalettierer (2);
- Einführen von mindestens einem Korb in die Drehvorrichtung (3), welche den Korb mit seinen Käsen um 180° dreht;
- Austretenlassen mindestens eines Korbs und der direkt auf dem Förderer (4) aufliegenden Käse aus der Drehvorrichtung (3);
- Entnehmen des bzw. der Körbe und Verbleib der Käse auf dem Förderer (4);
- Entnehmen der Käse (5) für ihre Behandlungsphase.

2. Verfahren zum Palettieren von Käsen, um sie in Lager- und/oder Transportkörbe aufzunehmen, das Verfahren umfassend:
- Einführen der Käse (6) in den Palettierer, wobei diese entweder von einer Behandlung kommen oder auch nicht;
- Positionieren der Käse auf einem Förderer (7) im geeigneten Abstand zu den Körben, in welchen sie aufgenommen werden sollen;
- Positionieren mindestens eines Korbs auf den Käsen, wobei die Käse in den Fächern des bzw. der Körbe angeordnet werden, in denen sie aufgenommen werden;
- Einführen mindestens eines Korbs mit den Käsen in die Drehvorrichtung (8);
- Drehen mindestens eines Korbs und seiner Käse im Inneren um einen Winkel von 180°;
- Entnehmen der Körbe und Käse aus derselben;
- Stapeln der Körbe (10) mit ihren Käsen im Stapler (9);
- Entnehmen der gestapelten Körbe (10) zwecks Lagerung oder Vertrieb derselben.

3. Verfahren zum Depalettieren/Palettieren von in Lager- und/oder Transportkörben angeordneten Käsen, **dadurch gekennzeichnet, dass** das Verfahren umfasst:
- ein Verfahren zum Depalettieren von Käsen nach Anspruch 1;
- Behandeln der Käse;
- ein Verfahren zum Palettieren von Käsen nach Anspruch 2.

4. Maschine zum Depalettieren/Palettieren von in Lager- und/oder Transportkörben angeordneten Käsen, die Maschine umfassend:
- einen Tisch (50) zum Einführen von Käselagerkörben (26);
- eine Drehvorrichtung (23) für mindestens einen Korb (26), welche von zwei peripheren Ringen (30) und einem zentralen Ring (31) gebildet und über einen Getriebemotor (33) betätigt ist, einen im Inneren dieser drei Ringe umschriebenen Rahmen (29), an welchem Förderer (27) und (28), zwischen denen der Korb mit Käsen beim Umdrehen derselben positioniert ist, miteinander verbunden sind;
- ein Förderer (24), wo die Körbe von den Käsen (36) getrennt werden;
- ein Förderband (27) für die Käse (36), um diese zur Behandlungsphase zu schicken;
- ein Förderband (28) für den Eintritt von behandelten Käsen (36) in den Palettierbereich (21);
- ein Förderer (39), wo ein oder mehrere Körbe auf den dort ausgerichteten Käsen positioniert sind;
- ein Roboter (34), welcher die leeren Körbe (26) aus dem Depalettierer (20) einsammelt und sie zu dem Palettierer (21) überführt, um sie mit Käsen (36) zu füllen, wobei der Roboter Räder (43), welche auf Schienen gleiten können, und eine Struktur (45), an welcher Greifer (46) für die Körbe schwenken, aufweist;
- eine Drehvorrichtung (40) für Körbe; und
- einen Roboter (34), um die vollen Körbe aus dem Palettierer zu entnehmen und sie zu stapeln.

5. Maschine zum Depalettieren/Palettieren von in Lager- und/oder Transportkörben angeordneten Käsen nach Anspruch 4, **dadurch gekennzeichnet, dass** die Greifer (46) an Schwingen (57), welche in an der Struktur (45) angelenkten Achsen (58) angelenkt sind, angebracht und über Pneumatikkolben (47) betätigt sind.

6. Maschine zum Depalettieren/Palettieren von in Lager- und/oder Transportkörben angeordneten Käsen nach Anspruch 4 und 5, **dadurch gekennzeichnet, dass** der Roboter (34) einen Pneumatikzylinder (44) aufweist, welcher die die Greifer (46) haltende Struktur (45) hebt und/oder senkt.

7. Maschine zum Depalettieren/Palettieren von in Lager- und/oder Transportkörben angeordneten Käsen nach Anspruch 4, **dadurch gekennzeichnet, dass** die peripheren Ringe (30) der Drehvorrichtung auf drehbaren Rollen (32) aufliegen und diese führen.

8. Maschine zum Depalettieren/Palettieren von in Lager- und/oder Transportkörben angeordneten Käsen nach Anspruch 4, **dadurch gekennzeichnet, dass** der Palettierer einen Arm (38) aufweist, welcher die Käse in aufeinanderfolgenden Ausrichtungen gemäß der Konfiguration des die Käse (36) enthaltenden Korbes von dem Zufuhrförderband (37) zu dem Förderer (24) transportiert.

9. Maschine zum Depalettieren/Palettieren von in Lager- und/oder Transportkörben angeordneten Käsen nach Anspruch 8, **dadurch gekennzeichnet, dass** der Arm (38) konkave Bereiche aufweist, in welche die Käse passen und somit der Abstand zwischen den Käsen gemäß der Form und den Abmessungen des Korbes (26) aufrecht erhalten bleibt.

10. Maschine zum Depalettieren/Palettieren von Käsen nach Anspruch 8, **dadurch gekennzeichnet, dass** der Arm (38) gerade ist.

11. Maschine zum Depalettieren/Palettieren von in Lager- und/oder Transportkörben angeordneten Käsen nach Anspruch 4, **dadurch gekennzeichnet, dass** der Förderer (27) eine Vertikalbewegung ausführen kann, so dass ihre Trennung an die Größe der die Käse (36) aufnehmenden Körbe (26) angepasst ist.

## Revendications

1. Procédé de dépalettisation de fromages situés dans des paniers de stockage et/ou de transport, qui comprend :
recueillir les paniers avec les fromages dans le processus de maturation de l'emplacement de stockage (1),
introduire les paniers dans le dépalettisateur (2),
introduire au moins un panier dans le dispositif de rotation (3) qui faite tourner le panier avec ses fromages sur 180°,
sortir au moins un panier et les fromages reposant directement sur le convoyeur (4) du dispositif de rotation (3),
retirer le ou les paniers et la permanence des fromages sur le convoyeur (4),
retirer les fromages (5) à leur phase de traitement.

2. Procédé de palettisation de fromages pour les placer dans des paniers de stockage et/ou de transport, qui comprend :
introduire les fromages (6) sur le palettiseur, soit provenant du traitement de ceux-ci ou non,
positionner les fromages sur un convoyeur (7) à la distance appropriée aux paniers destinés à les contenir,
positionner au moins un panier sur les fromages, les fromages se situant dans des compartiments du ou des paniers qui vont les contenir,
introduire au moins un panier avec les fromages dans un dispositif de rotation (8),
faire tourner au moins un panier et ses fromages se trouvant dans celui-ci selon un angle de 180°,
retirer les paniers et les fromages de ceux-ci,
empiler les paniers (10) avec leurs fromages dans l'empileur (9),
retirer les paniers empilés (10) en vue de leur stockage ou de leur distribution.

3. Procédé de dépalettisation-palettisation de fromages placés dans des paniers de stockage et/ou de transport, **caractérisé en ce qu'**il comprend :
un procédé de dépalettisation des fromages selon la revendication 1,
le traitement des fromages,
un procédé de palettisation des fromages selon la revendication 2.

4. Machine pour la dépalettisation-palettisation de fromages placés dans des paniers de stockage et/ou de transport, comprenant :
une table (50) pour introduire des paniers de stockage de fromages (26)
un dispositif de rotation (23) d'au moins un panier (26) formé par deux anneaux périphériques (30) et un anneau central (31) actionnés par un motoréducteur (33), un cadre (29) étant circonscrit à l'intérieur de ces trois anneaux où les convoyeurs (27) et (28), entre lesquels le panier avec les fromages est positionné durant leur rotation, sont reliés,
un convoyeur (24) où les paniers sont séparés des fromages (36),
une courroie de convoyage (27) pour les fromages (36) pour les envoyer à la phase de traitement,
une courroie de convoyage (28) pour l'entrée des fromages traités (36) dans la zone de palettisation (21),
un convoyeur (39) où un ou plusieurs paniers sont positionnés sur les fromages alignés sur celui-ci,
un robot (34) qui recueille les paniers vides (26) du dépalettiseur (20) et qui les transfère au palettiseur (21) pour les remplir avec des fromages (36), ledit robot possède des roues (43) aptes à coulisser sur des rails, ainsi qu'une structure (45) sur laquelle des organes de préhension (46) des paniers basculent,
un dispositif de rotation (40) des paniers ; et
un robot (34) pour retirer les paniers remplis du palettiseur pour les empiler.

5. Machine pour la dépalettisation-palettisation de fromages placés dans des paniers de stockage et/ou de transport selon la revendication 4, **caractérisée en ce que** les organes de préhension (46) sont fixés à des culbuteurs (57) articulés dans des axes (58) articulés à la structure (45) et actionnés par des pistons pneumatiques (47).

6. Machine pour la dépalettisation-palettisation de fromages placés dans des paniers de stockage et/ou de transport selon la revendication 4 et 5, **caractérisée en ce que** le robot (34) comporte un vérin pneumatique (44) qui relève et/ou abaisse la structure (45) tenant les organes de préhension (46).

7. Machine pour la dépalettisation-palettisation de fromages placés dans des paniers de stockage et/ou de transport selon la revendication 4, **caractérisée en ce que** les anneaux périphériques (30) du dispositif de rotation reposent sur et guident des rouleaux tournants (32).

8. Machine pour la dépalettisation-palettisation de fromages placés dans des paniers de stockage et/ou de transport selon la revendication 4, **caractérisée en ce que** le palettiseur possède un bras (38) qui déplace les fromages de la courroie de convoyage d'amenée (37) au convoyeur (24) selon des alignements successifs en accord avec la configuration du panier contenant les fromages (36).

9. Machine pour la dépalettisation-palettisation de fromages placés dans des paniers de stockage et/ou de transport selon la revendication 8, **caractérisée en ce que** le bras (38) possède des portions concaves dans lesquelles les fromages s'ajustent et maintiennent ainsi la distance entre les fromage en accord avec la forme et les dimensions du panier (26).

10. Machine pour la dépalettisation-palettisation de fromages selon la revendication 8, **caractérisée en ce que** le bras (38) est rectiligne.

11. Machine pour la dépalettisation-palettisation de fromages placés dans des paniers de stockage et/ou de transport selon la revendication 4, **caractérisée en ce que** le convoyeur (27) est apte à se déplacer verticalement en adaptant leur séparation à la taille des paniers (26) contenant les fromages (36).
